## Europäisches Patentamt
## European Patent Office
## Office européen des brevets

(19)

(11) Numéro de publication: **0 044 762**
**A1**

(12)

# DEMANDE DE BREVET EUROPEEN

(21) Numéro de dépôt: **81401052.6**

(22) Date de dépôt: **30.06.81**

(51) Int. Cl.³: **G 02 F 1/17**

(30) Priorité: **03.07.80 FR 8014838**

(43) Date de publication de la demande:
**27.01.82 Bulletin 82/4**

(84) Etats contractants désignés:
**CH DE GB IT LI NL**

(71) Demandeur: **COMMISSARIAT A L'ENERGIE ATOMIQUE Etablissement de Caractère Scientifique Technique et Industriel**
**B.P. 510**
**F-75752 Paris Cedex 15(FR)**

(72) Inventeur: **Grange, Hubert**
**23, Avenue Malherbe**
**F-38100 Grenoble(FR)**

(72) Inventeur: **Meyer, Robert**
**Saint Nazaire Les Eymes**
**F-38330 Saint Ismier(FR)**

(74) Mandataire: **Mongrédien, André et al,**
**c/o Brevatome 25, rue de Ponthieu**
**F-75008 Paris(FR)**

(54) Dispositif d'affichage électrolytique en clair sur fond sombre.

(57) L'invention concerne un dispositif d'affichage électrolytique en clair sur fond sombre.

Ce dispositif comprend une source lumineuse (2) éclairant une cellule (4) formée de deux parois isolantes (8, 10), l'une des parois étant munie d'une électrode (12) constituée de segments, l'autre d'une contre-électrode (14), un électrolyte (6) intercalé entre les électrodes (12, 14) et des moyens d'alimentation électrique (18, 20) reliés aux électrodes. De plus, ce dispositif comprend des moyens (22) pour donner aux segments excités un premier aspect sombre, des moyens (24) pour donner aux segments non excités un aspect clair, ces segments étant ceux que l'on veut voir affichés et des moyens (42) pour donner à toute la surface de l'électrode (12) dépourvue de segments un second aspect sombre identique au premier.

Application à l'affichage numérique.

FIG. 1

La présente invention concerne un dispositif d'affichage electrolytique en clair sur fond sombre. L'invention trouve une application en optoélectronique et notamment dans l'affichage de caractères
alphanumériques.

En général, un dispositif d'affichage électrolytique comprend une source lumineuse éclairant une
cellule formée de deux parois isolantes entre lesquelles est intercalé un électrolyte. L'une de ces parois
est munie d'une électrode constituée par exemple de
plusieurs segments servant à l'affichage, l'autre paroi d'une contre-électrode placée en regard de l'électrode. Ce dispositif comprend de plus, des moyens
d'alimentation électriques reliés auxdites électrodes.

L'affichage sur un tel dispositif est obtenu
en provoquant sur l'électrode, par réaction électrochimique, le dépôt ou la dissolution d'une couche dont
les propriétés optiques (réflexion, transmission ou
absorption) sont susceptibles de faire naître un signe
(caractères, courbes, segments, etc...).

Dans certains dispositifs, la couche déposée par réaction électrochimique est une couche métallique absorbante (c'est le cas notamment des couches
d'argent). Dans d'autres, il s'agit d'une couche organique absorbante (c'est le cas notamment du diheptyl
viologène).

Dans de tels dispositifs, c'est le dépôt de
la couche métallique ou organique, de couleur sombre,
qui définit l'affichage des caractères alphanumériques sur un fond clair pouvant être coloré.

Pour améliorer l'affichage et en particulier pour éviter une trop grande luminosité du panneau
d'affichage (cas du tableau de bord dans les applications automobiles ou aéronautiques), on envisage un affichage dit "inversé", c'est-à-dire défini en clair sur fond sombre. Cet aspect est déjà obtenu dans des dispositifs à cristaux liquides (effets obtenus par inversion des polariseurs dans les cristaux liquides), et dans des afficheurs électromécaniques. Actuellement, on ne connaît pas de dispositif à affichage électrolytique réalisant un affichage inversé.

La présente invention permet d'obtenir un affichage électrolytique en clair sur fond sombre.

Ce dispositif d'affichage électrolytique du genre de ceux qui ont été décrits précédemment comprend :

- des moyens pour donner aux segments excités de l'électrode un premier aspect sombre,
- des moyens pour donner aux segments non excités de l'électrode un aspect clair, ces segments étant ceux que l'on désire voir affichés, et
- des moyens pour donner, à toute la surface de l'électrode dépourvue de segments, un second aspect sombre identique au premier.

Selon un mode préféré de l'invention, les moyens pour donner le premier aspect sombre sont constitués d'un premier dépôt sombre, obtenu par réaction électrochimique à partir des ions contenus dans l'électrolyte.

Ce premier dépôt sombre est constitué de préférence par de l'argent absorbant comme présenté dans la demande de brevet français n° EN 76 15103 déposée par le demandeur le 19 mai 1976 et intitulée "Dispositif d'affichage électrolytique à dépôt absorbant".

Selon un autre mode préféré de l'invention, les moyens pour donner l'aspect clair sont constitués d'un écran poreux uniformément coloré, disposé devant la couche conductrice associée à la seconde paroi et au contact de l'électrolyte.

B 7003-3 LC

Un tel écran poreux est présenté dans la demande de brevet français n° EN 77 16676 déposée le 1er juin 1977 par le demandeur et intitulée "Cellule d'affichage électrolytique à écran poreux".

Selon un autre mode préféré de l'invention, les moyens pour donner le second aspect sombre sont constitués d'un second dépôt sombre conducteur. Ce second dépôt conducteur est de préférence en argent absorbant ou en platine, ce dernier étant déposé en atmosphère d'oxygène.

Selon un autre mode préféré de l'invention, les moyens pour donner le second aspect sombre sont constitués d'un second dépôt sombre isolant constitué d'un oxyde choisi dans le groupe comprenant $Al_2O_{3-x}$ et $Ta_2O_{3-x}$, où x est un nombre inférieur à 3.

D'autres caractéristiques et avantages de l'invention ressortiront de la description qui va suivre donnée à titre purement illustratif et non limitatif, en référence aux figures annexées, dans lesquelles :

- la figure 1 représente schématiquement une vue en coupe d'un premier mode de réalisation du dispositif selon l'invention,

- la figure 2 représente schématiquement le gravage des segments constituant l'électrode,

- la figure 3 représente schématiquement une vue en perspective du dispositif de la figure 1,

- la figure 4 représente schématiquement un deuxième mode de réalisation du dispositif selon l'invention,

- la figure 5 représente schématiquement un troisième mode de réalisation du dispositif selon l'invention,

- la figure 6 représente schématiquement un quatrième mode de réalisation du dispositif selon l'invention,

- la figure 7 représente schématiquement un cinquième mode de réalisation du dispositif selon l'invention,

- la figure 8 représente schématiquement un affichage obtenu selon le dispositif de l'invention.

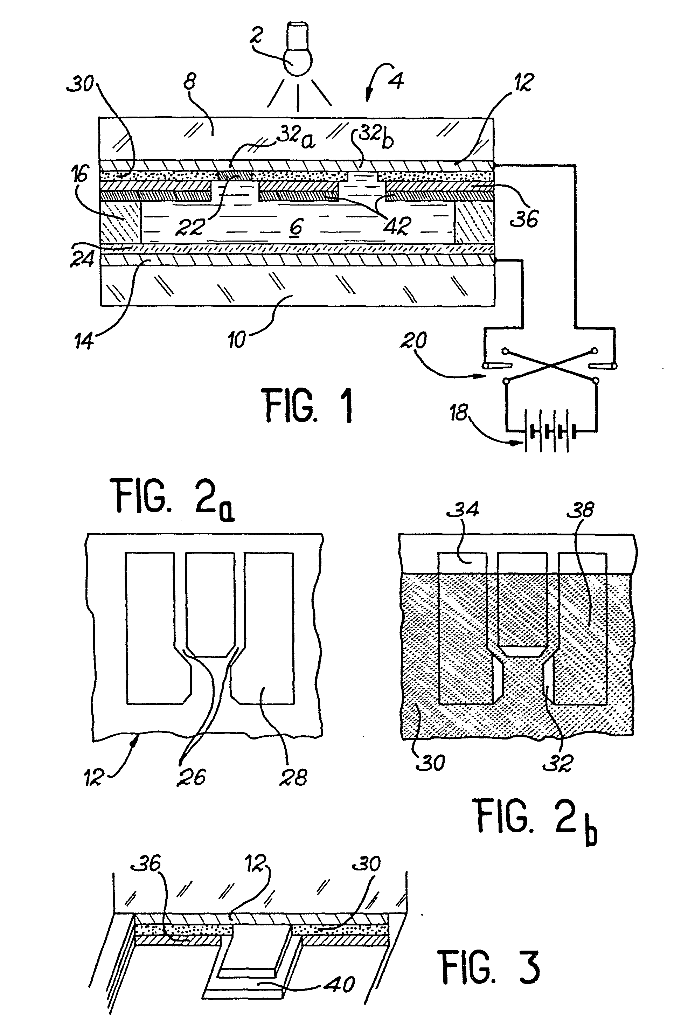

Le dispositif d'affichage électrolytique représenté sur la figure 1 comprend une source lumineuse 2 qui éclaire une cellule 4 constituée par un électrolyte 6 intercalé entre deux parois isolantes, une première paroi transparente 8 et une seconde paroi 10. Les deux parois 8 et 10 sont recouvertes d'une couche conductrice respectivement 12 et 14 placées en regard l'une de l'autre.

Dans ce mode de réalisation, la couche 12 forme une électrode transparente et possède une structure appropriée à l'affichage (matrice de points, segments,...) qui sera décrite ultérieurement ; la couche 14 forme une contre-électrode. Cette contre-électrode 14 peut être transparente ou non, suivant que le dispositif d'affichage travaille en réflexion ou en transmission (se référer à la demande de brevet n° EN 76 15103 déjà citée). Des cales d'épaisseur 16, isolantes, permettent de maintenir écartées l'une de l'autre les deux parois 8 et 10. Les couches conductrices 12 et 14 sont reliées à une source de tension 18 par l'intermédiaire d'un commutateur 20 qui permet d'appliquer entre lesdites couches 12 et 14 une différence de potentiel continu dans un sens ou dans l'autre.

Des réactions électrochimiques d'oxydoréduction entraînent le dépôt ou la dissolution sur l'électrode 12 (selon la polarité) d'un premier dépôt sombre conducteur 22 qui est de préférence constitué par de l'argent absorbant.

De plus, selon l'invention, la cellule 4 comprend en outre un écran clair 24, poreux aux ions et uniformément coloré, disposé devant la contre-électrode 14 et au contact de l'électrolyte 6. Ce fait d'utiliser un écran 24 clair permet d'obtenir un affichage clair sur fond sombre.

L'électrode 12 de forme adaptée à l'affichage est représentée de façon plus détaillée sur la figure 2. Cette électrode 12 est réalisée par exemple par une couche d'oxyde conducteur, munie de sillons 26 de 30 à 50$\mu$ de large (figure 2a) gravés dans l'électrode de façon à isoler les unes des autres les zones d'amenée de courant 28.

Dans ce premier mode de réalisation, l'électrode est recouverte d'une couche isolante 30 (figure 2b) de préférence de la silice, gravée suivant les motifs à afficher 32. Cette couche de silice 30 peut présenter une épaisseur supérieure à l'épaisseur du premier dépôt 22.

Les motifs 32 présentent ici la forme de segments, mais toute autre forme pourrait être envisagée. Des contacts électriques 34 permettent d'alimenter en courant les différents segments 32 par l'intermédiaire de la source de tension 18. Un exemple d'une telle électrode est décrit dans la demande de brevet français n° EN 79 16740 déposée par le demandeur le 28 juin 1979 et intitulée "Systèmes d'électrodes de commande pour afficheur numérique à sept segments".

Dans ce premier mode de réalisation du dispositif selon l'invention, la couche isolante 30 est recouverte d'une couche d'oxyde conductrice 36, représentée sur les figures 1 et 3. Cette couche d'oxyde 36 est déposée suivant le complément 38 des motifs 32 gravés dans la couche isolante 30 et de façon à laisser un liseré isolant 40 entre l'électrode 12 et la couche d'oxyde 36 (figure 3). Ceci permet de bien isoler chaque motif du segment 32 de la partie complémentaire 38 (figure 2b).

B 7003-3 LC

Pour obtenir un affichage électrolytique en clair sur fond sombre, il est nécessaire de déposer un second dépôt sombre 42 (figure 1) qui dans ce premier mode de réalisation est constitué comme le premier dépôt sombre 22 par de l'argent absorbant.

A cet effet, la couche d'oxyde conductrice 36 est excitée par la tension d'affichage, de la même façon que les segments 32a non affichés ; les segments affichés 32b, non excités, demeurent transparents et laissent apparaître pour l'observateur l'écran clair 24.

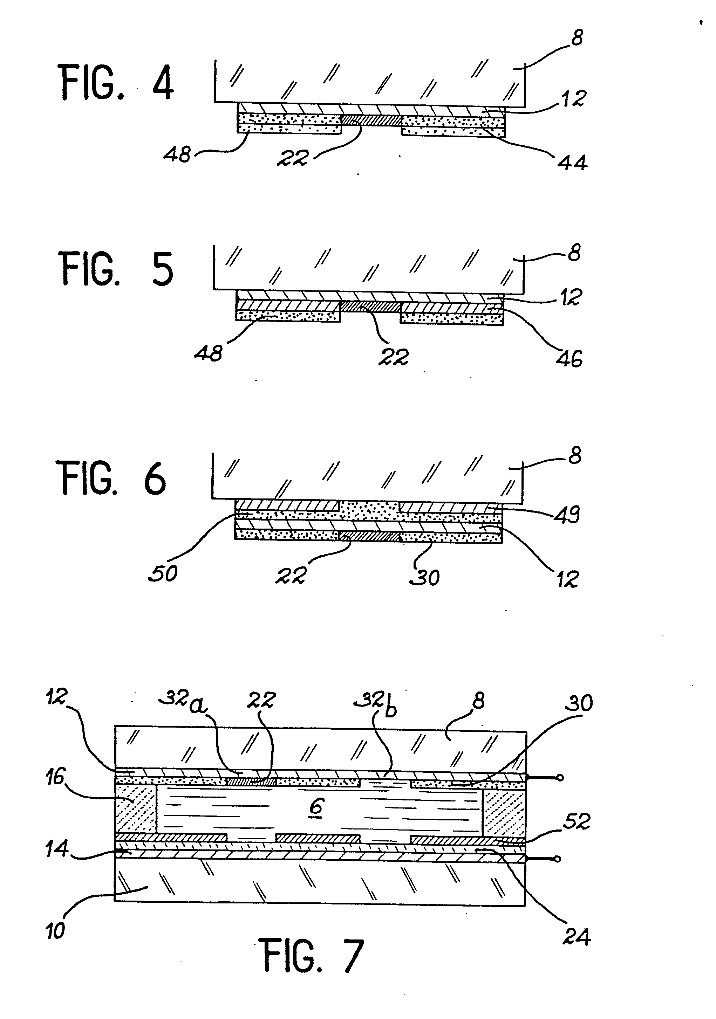

La figure 4 représente un deuxième mode de réalisation du dispositif selon l'invention. Pour simplifier la description, on n'a représenté que la partie du dispositif modifiée par rapport au premier mode de réalisation.

Dans ce mode de réalisation, le second dépôt sombre référencé 44 est déposé directement sur l'électrode 12 gravée comme précédemment (figure 2a). Ce second dépôt 44 gravé suivant les motifs à afficher (figure 2b) est constitué par un oxyde du type $Al_2O_{3-x}$ ou $Ta_2O_{3-x}$, où x est un nombre inférieur à 3. Ces oxydes jouent à la fois le rôle de dépôt sombre de façon à obtenir un affichage clair sur fond sombre comme l'écran poreux 24, et le rôle d'isolant comme précédemment la couche isolante 30 du premier mode de réalisation.

Dans le cas où le rôle isolant de la couche 44 serait insuffisant, on peut ajouter une couche isolante telle que la couche 48 du troisième mode de réalisation.

Du point de vue optique, l'affichage obtenu est meilleur que celui que l'on obtient dans le premier mode de réalisation, du fait que le premier dépôt sombre 22 déposé par réaction électrochimique a lieu au même niveau que le second dépôt sombre 44.

B 7003-3 LC

Bien que la nature de ce second dépôt 44 soit différente de celle qui constitue le premier dépôt 22 en argent absorbant, l'aspect optique de ces deux dépôts est identique.

La figure 5 représente un troisième mode de réalisation du dispositif selon l'invention. Comme dans le mode de réalisation représenté sur la figure 4, le second dépôt sombre, référencé 46, est déposé directement sur l'électrode 12 et le premier dépôt sombre 22 a lieu au même niveau que ce second dépôt 46. Dans ce mode de réalisation, le second dépôt sombre 46 est réalisé par une couche métallique conductrice et de préférence en platine oxygéné.

En effet, le platine est déposé en atmosphère d'oxygène, ce qui lui confère un aspect moins brillant par rapport au platine pur, et ce qui favorise sa ressemblance avec le premier dépôt sombre 22 en argent absorbant. Il est à noter que la ressemblance entre le platine oxygéné et l'argent déposé par électrochimie est meilleure que celle que l'on obtient entre l'argent déposé par sérigraphie et déposé électrolytiquement.

Comme précédemment, ce second dépôt 46 en platine doit être gravé (figure 2b) de façon à éviter tout court-circuit entre les différentes zones d'amenée de courant 28.

Comme le platine est conducteur, il est nécessaire de le recouvrir d'une couche isolante 48 de préférence en silice, pour éviter qu'un dépôt électrolytique ne se produise sur sa surface.

La figure 6 représente un quatrième mode de réalisation du dispositif selon l'invention. Dans ce mode de réalisation, le second dépôt sombre référencé 49 est appliqué directement sur la première paroi isolante 8 et gravé comme précédemment (figure 2b). Ce

B 7003-3 LC

second dépôt 49 réalisé en platine oxygéné est recouvert d'une couche isolante 50, de préférence en silice. Cette couche isolante 50 est recouverte par l'électrode 12 gravée comme précédemment (figure 2a), ladite électrode étant elle-même recouverte par la couche isolante 30 en silice gravée comme sur la figure 2b. Dans ce mode de réalisation, le premier dépôt sombre 22 a lieu au même niveau que la couche isolante 30.

La figure 7 représente un cinquième mode de réalisation du dispositif selon l'invention. Dans ce mode de réalisation, comme dans le premier mode de réalisation, la paroi isolante 8 est recouverte par l'électrode 12 puis par la couche isolante 30 gravée suivant les motifs à afficher 32. La contre-électrode 14 recouvrant la paroi isolante 10 est constituée par de l'argent et, comme précédemment, l'écran clair 24 est disposé devant ladite contre-électrode.

Le second dépôt sombre référencé 52 déposé sur l'écran clair 24 peut être réalisé comme précédemment, sous forme d'un dépôt d'oxyde ou d'un dépôt de platine. Ce second dépôt sombre 52 est gravé comme précédemment selon les motifs à afficher (figure 2b), le dépôt sombre 52 peut également être déposé directement par sérigraphie selon la géométrie désirée.

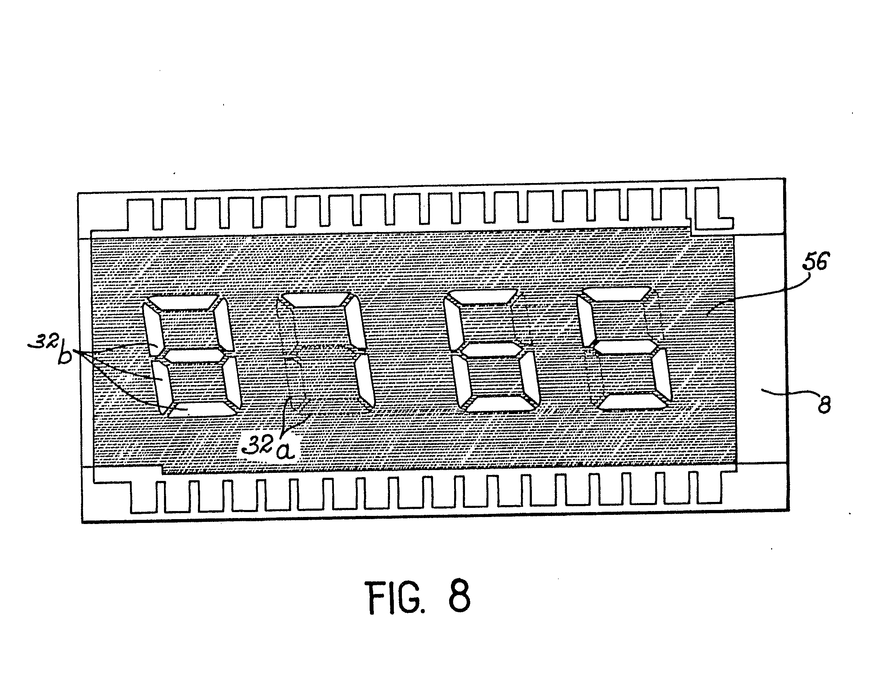

Les différents modes de réalisation décrits ci-dessus permettent d'obtenir un affichage électrolytique en clair sur fond sombre comme schématisé sur la figure 8. La zone 56 représentant toute la partie de l'électrode dépourvue de segments 32 présente un aspect sombre obtenu par les différents dépôts sombres 42, 44, 46, 49 et 52. Les segments excités 32a présentent le même aspect sombre. Cet aspect sombre est obtenu par dépôt de l'argent absorbant par réaction électrochimique. Les segments non excités 32b appa-

B 7003-3 LC

raissent en clair sur le dispositif d'affichage. Cet aspect clair est donné par la présence de l'écran poreux 24. Lorsque celui-ci est uniformément coloré, les segments non excités 32b, donc l'affichage, apparaissent colorés. La composition d'un écran coloré est présentée dans la demande de brevet n° EN 77 16676 déjà citée.

Un exemple de fabrication du dispositif d'affichage va être maintenant décrit. Cette fabrication concerne le quatrième mode de réalisation (figure 6). Le second dépôt sombre en platine est pulvérisé en atmosphère d'argon et d'oxygène sur une lame de verre constituant la première paroi de la cellule. On peut faire varier les concentrations en oxygène et argon ainsi que les temps de pulvérisation du platine oxygéné de façon à obtenir un dépôt ayant des propriétés optiques (aspect) les plus voisines possibles des propriétés optiques de l'argent absorbant (premier dépôt sombre) déposé électrolytiquement.

Puis on grave les motifs à afficher dans le dépôt de platine en éliminant les zones correspondant aux segments. La couche isolante de silice est ensuite déposée sur le dépôt de platine par dépôt chimique en phase vapeur (Chemical Vapor Deposite en littérature anglosaxonne). Le reste de la face avant (dépôt d'oxyde conducteur, dépôt de la couche isolante, gravure de la couche isolante pour faire disparaître les zones correspondant aux segments), l'assemblage de la cellule et le remplissage de celle-ci sont réalisés comme dans le mode opératoire d'un dispositif d'affichage classique.

REVENDICATIONS

1. Dispositif d'affichage électrolytique en clair sur fond sombre du genre de ceux qui comprennent une source lumineuse (2) éclairant une cellule (4) formée de deux parois isolantes, une première paroi transparente (8) et une seconde paroi (10) maintenues écartées l'une de l'autre, l'une des parois (8, 10) étant munie d'une première couche conductrice (12) formant électrode et transparente, constituée de plusieurs segments (32) servant à l'affichage, l'autre paroi (10, 8) d'une seconde couche conductrice (14) formant contre-électrode, placée en regard de l'électrode, un électrolyte (6) contenant des ions et intercalé entre l'électrode et la contre-électrode, et des moyens d'alimentation électriques (18, 20) reliés à l'électrode (12) et à la contre-électrode (14), caractérisé en ce qu'il comprend en outre :
- des moyens (22) pour donner aux segments excités (32a) de l'électrode (12) un premier aspect sombre,
- des moyens (24) pour donner aux segments non excités (32b) de l'électrode (12) un aspect clair, ces segments étant ceux que l'on désire voir affichés, et
- des moyens (42, 44, 46, 49, 52) pour donner à toute la surface de l'électrode dépourvue de segments (56) un second aspect sombre identique au premier.

2. Dispositif d'affichage selon la revendication 1, caractérisé en ce que les moyens pour donner le premier aspect sombre sont constitués d'un premier dépôt sombre (22) obtenu par réaction électrochimique à partir des ions contenus dans l'électrolyte (6).

3. Dispositif d'affichage selon la revendication 2, caractérisé en ce que le premier dépôt sombre (22) est de l'argent absorbant.

4. Dispositif d'affichage selon l'une quelconque des revendications 1 à 3, caractérisé en ce que

B 7003-3 LC

les moyens pour donner l'aspect clair sont constitués d'un écran poreux (24) uniformément coloré, disposé devant la couche conductrice associée à la seconde paroi (10) et au contact de l'électrolyte (6).

5. Dispositif d'affichage selon l'une quelconque des revendications 1 à 4, caractérisé en ce que les moyens pour donner le second aspect sombre sont constitués d'un second dépôt sombre conducteur (42, 46, 49, 52).

6. Dispositif d'affichage selon la revendication 5, caractérisé en ce que le second dépôt conducteur est de l'argent absorbant (42) obtenu par réaction électrochimique à partir des ions contenus dans l'électrolyte (6).

7. Dispositif d'affichage selon la revendication 5, caractérisé en ce que le second dépôt conducteur est du platine (46, 49, 52) déposé en atmosphère d'oxygène.

8. Dispositif d'affichage selon l'une quelconque des revendications 1 à 4, caractérisé en ce que les moyens pour donner le second aspect sombre sont constitués d'un second dépôt sombre isolant (44).

9. Dispositif d'affichage selon la revendication 8, caractérisé en ce que le second dépôt isolant (44) est un oxyde choisi dans le groupe comprenant $Al_2O_{3-x}$ et $Ta_2O_{3-x}$, où x est un nombre inférieur à 3.

10. Dispositif d'affichage selon l'une quelconque des revendications 7 à 9, caractérisé en ce que le second dépôt sombre est recouvert d'une première couche isolante transparente (48, 50).

11. Dispositif d'affichage selon les revendications 5 et 8, caractérisé en ce que le second dépôt sombre (42, 44, 46, 49, 52) est réalisé sélectivement en dehors des segments (32) de l'électrode (12).

B 7003-3 LC

0044762

12. Dispositif d'affichage selon l'une quelconque des revendications 1 à 11, caractérisé en ce que l'électrode (12) est recouverte d'une seconde couche isolante transparente (30) gravée suivant la forme des segments (32) de ladite électrode.

13. Dispositif d'affichage selon les revendications 6 et 12, caractérisé en ce que la seconde couche isolante (30) est recouverte d'une couche d'oxyde conductrice et transparente (36) disposée sur la surface de l'électrode dépourvue de segments (56), ladite couche conductrice étant munie d'un liseré isolant (40) situé entre l'électrode (12) et la couche d'oxyde conductrice (36) et en ce que le second dépôt sombre (42) est disposé sur ladite couche conductrice.

14. Dispositif d'affichage selon l'une quelconque des revendications 5 à 8, caractérisé en ce que le second dépôt sombre (44, 46) est situé directement sur l'électrode (12).

15. Dispositif d'affichage selon l'une quelconque des revendications 5, 7, 8, 11, 12, caractérisé en ce que le second dépôt sombre (49) est disposé entre l'électrode (12) et la paroi correspondante (8).

16. Dispositif d'affichage selon l'une quelconque des revendications 5, 7, 8, 11, 12, caractérisé en ce que le second dépôt sombre (52) est situé sur l'écran poreux (24).

17. Dispositif d'affichage selon l'une quelconque des revendications 8 et 12, caractérisé en ce que la première couche isolante (48, 50) et la seconde couche isolante (30) sont en silice.

FIG. 1

FIG. 2a

FIG. 2b

FIG. 3

FIG. 4

FIG. 5

FIG. 6

FIG. 7

FIG. 8

Office européen
des brevets

**RAPPORT DE RECHERCHE EUROPEENNE**

EP 81 40 1052

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| | DE - A - 2 803 604 (SHARP K.K.)<br>  * Page 8, lignes 1-12; page 11, ligne 10 - page 12, ligne 15; page 15, ligne 19 - page 16, ligne 3; figures 5,6 *<br><br>& US - A - 4 187 004<br><br>-- | 1,4,<br>11 | G 02 F 1/17 |
| | US - A - 3 096 271 (W.G. HESPEN-HEIDE)<br>  * Colonne 4, lignes 8-30; figures 7-8 *<br><br>-- | 1 | |
| | US - A - 3 416 248 (CH.G.KALT et al.)<br>  * Revendications 1,2; colonne 3, lignes 20-26; colonne 5, lignes 17-24 *<br><br>-- | 1,3,5 | **DOMAINES TECHNIQUES RECHERCHES (Int. Cl.³)**<br><br>G 02 F 1/17 |
| | US - A - 3 832 034 (H.D. EDMONDS)<br>  * Revendication 1 *<br><br>-- | 1,8,<br>11 | |
| A | EP - A - 0 000 109 (C.E.A.)<br>  * Page 7, lignes 8-32 * | 1,4 | **CATEGORIE DES DOCUMENTS CITES** |
| AD | & FR - A - 2 393 386<br><br>---- | | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| | | | &: membre de la même famille, document correspondant |

| ☒ | Le présent rapport de recherche a été établi pour toutes les revendications | |
|---|---|---|
| Lieu de la recherche<br>**La Haye** | Date d'achèvement de la recherche<br>**15-10-1981** | Examinateur<br>**BORMS** |

OEB Form 1503.1  06.78